# EUROPÄISCHE PATENTSCHRIFT

(11) **EP 1 109 032 B1**
(45) Veröffentlichungstag und Bekanntmachung des Hinweises auf die Patenterteilung: **05.03.2003**
(21) Anmeldenummer: 99124808.9
(22) Anmeldetag: 13.12.1999
(51) Int. Cl.: G01S 5/14, G01S 5/00, G08G 5/04

(54) **Verfahren und System zum Warnen vor Kollisionen zwischen Fluggeräten**
Method and system for warning against collisions between aircraft
Procédé et dispositif d'avertissement des collisions entre avions

(43) Veröffentlichungstag der Anmeldung: 20.06.2001
(73) Patentinhaber: Schüssler, Jens Rainer, 65191 Wiesbaden (DE)
(72) Erfinder: Schüssler, Jens Rainer, 65191 Wiesbaden (DE)
(74) Vertreter: Patentanwälte Hauck, Graalfs, Wehnert, Döring, Siemons, Schildberg

(56) Entgegenhaltungen:
- FR-A- 2 716 028
- US-A- 4 835 537
- US-A- 5 313 201
- US-A- 5 448 768
- US-A- 5 519 403
- US-A- 5 714 948
- US-A- 5 913 170

## Beschreibung

Die Erfindung bezieht sich auf ein Verfahren und auf ein System zum Warnen vor Kollisionen zwischen Fluggeräten.

Die Fluggeräte der allgemeinen Luftfahrt besitzen keine Zusammenstoßwarngeräte. Hierzu gehören ein- und mehrmotorige Privat- und Geschäftsflugzeuge, Motorsegler, Segelflugzeuge, Ultraleichtflugzeuge und private und geschäftliche Helikopter, die nicht unter die Kategorie der Verkehrsflugzeuge, der Transportflugzeuge oder der Militärluftfahrt fallen. Entsprechende Warngeräte sind auch nicht bei Luftsportgeräten vorgesehen, wie z.B. bei Heißluftballonen.

Die Flugzeuge der regionalen Verkehrsluftfahrt, wie zum Beispiel Zubringerdienste, sind normalerweise nicht mit dem sehr aufwendigen Antikollisionssystem der Großflugzeuge ausgerüstet, welches auf dem Prinzip der Radarerfassung und Identifikation über einen Transponder basiert. Die größte Kollisionsgefahr für die Flugzeuge der regionalen Verkehrsluftfahrt besteht in einer Annäherung an Flugzeuge der allgemeinen Luftfahrt im unkontrollierten Luftraum, wo sich beide Flugzeuge legal bewegen - jedoch oft nicht über die Existenz des anderen informiert sind.

Außerdem ist die Reichweite der Radargeräte von Flugzeugen der Verkehrsluftfahrt verhältnismäßig begrenzt.

Die US 5 714 948 und die FR-A-2 716 028 offenbaren Verfahren und Vorrichtungen zur Überwachung des Flugverkehrs, die in der gewerblichen Luftfahrt (Verkehrsfliegerei) zum Einsatz kommen. Diese Schriften beschreiben also Anwendungen für die gewerbliche Luftfahrt im kontrollierten Luftraum, der in jedem Fall von einem "ATC" (Air Trafic Controller = Fluglotse) überwacht und geregelt wird. Die beschriebenen Systeme mit einem Koordinierungsrechner in der Bodenstation sind hier lediglich Hilfsmittel für den ATC und den Piloten. Diese bekannten Systeme verlangen in den Flugzeugen Investionen im einstelligen Millionenbereich pro Flugzeug, Kosten für die Typenprüfung und Zulassung der Geräte im zweistelligen Millionenbereich und am Boden Investitionen im dreistelligen Millionenbereich.

Davon ausgehend liegt der Erfindung die Aufgabe zugrunde, eine Technik zum Warnen vor Kollisionen zwischen Fluggeräten zu schaffen, die unter vermindertem Aufwand ausgeführt werden kann und deshalb besonders für den Einsatz in der allgemeinen Luftfahrt, der regionalen Verkehrsluftfahrt und sogar bei Luftsportgeräten geeignet ist, die grundsätzlich aber auch in der Verkehrsluftfahrt zum Einsatz kommen kann, insbesondere um eine Erfassung der Verkehrslage in einem weiteren Umfeld zu ermöglichen.

Die Aufgabe wird durch ein Verfahren mit den Merkmalen des Anspruches 1 und durch ein System mit den Merkmalen des Anspruches 12 gelöst. Vorteilhafte Ausgestaltungen sind in den Unteransprüchen angegeben.

Bei dem erfindungsgemäßen Verfahren weisen Fluggeräte eine Vorrichtung zum Ermitteln von Daten über ihre Position auf. Vorzugsweise ermittelt die Vorrichtung zudem Daten über Flughöhe und/oder Kurs und/oder Geschwindigkeit der Fluggeräte. Dabei kann sich die Vorrichtung eines GPS (Global Positioning System) bedienen, mit dem die gewünschten Daten verhältnismäßig kostengünstig und mit hoher Genauigkeit zur Verfügung gestellt werden können.

Die ermittelten Daten werden von den Fluggeräten über Funk an einen Vermittlungsrechner übermittelt. Dafür kann ein zentraler und/oder können mehrere dezentrale Vermittlungsrechner vorhanden sein, die miteinander vernetzt sein können. Die Übermittlung der Daten an den Vermittlungsrechner erfolgt mittels Mobilfunk. Vorzugsweise werden die Daten zusammen mit einer Kennung des Fluggerätes übermittelt, um eine Identifikation des den Daten zugeordneten Fluggerätes zu ermöglichen.

Vorzugsweise können in Zeitabständen aktualisierte Daten übermittelt werden. Ferner können die Zeitabstände zwischen Übermittlung aktualisierter Daten in Abhängigkeit vom Kollisionsrisiko der betroffenen Fluggeräte verändert werden.

Darüber hinaus ist es möglich, daß die von den Fluggeräten an den Vermittlungsrechner übermittelten Daten an dieselben Fluggeräte zurück übermittelt und einer Funktionskontrolle unterworfen werden. Gemäß einer weiteren Ausgestaltung können die Daten von den Fluggeräten an dasjenige oder diejenigen anderen Fluggeräte übermittelt werden, die sich auf einen potentiellen Kollisionskurs zu den erstgenannten Fluggeräten befinden und/oder sich in einem definierten Kollisionsbereich um die erstgenannten Fluggeräte befinden.

Die Daten von Fluggeräten, bei denen ein erhöhtes Risiko einer Kollision mit einem oder mehreren anderen Fluggeräten besteht, werden vom Vermittlungsrechner über Funk an diese anderen Fluggeräte übermittelt. Ein erhöhtes Kollisionsrisiko besteht insbesondere zwischen den Fluggeräten, die sich auf einem potentiellen Kollisionskurs befinden und/oder zwischen den Fluggeräten, die sich in einem definierten Kollisionsbereich befinden. Bei dem Kollisionsbereich kann es sich insbesondere um eine Funkzelle eines Funksystems handeln, d.h. um ein von einer bestimmten Funkstation versorgtes Gebiet. Dafür können die Fluggeräte über Funk automatisch Verbindung mit der jeweils die größte Feldstärke aufweisenden Funkzelle eines Funksystems aufnehmen und die in der Funkzelle übermittelten Daten vom Vermittlungsrechner an die Fluggeräte übermittelt werden, die über Funk Verbindung mit derselben oder einer benachbarten Funkzelle haben. Zusätzlich oder statt dessen können die Fluggeräte über Funk automatisch gleichzeitig Verbindung mit mehreren Funkzellen mit den größten Feldstärken des Funksystems aufnehmen und die in diesen Funkzellen übermittelten Daten vom Vermittlungsrechner an die Fluggeräte übermittelt werden, die über Funk Verbindung mit denselben Funkzellen haben. Solche Funkzellen sind beispielsweise bei den etablierten Mobilfunknetzen gegeben. Mobilfunk wird vorzugsweise auch für die Übermittlung der Daten an die anderen Fluggeräte benutzt.

Zusätzlich kann der Vermittlungsrechner über Funk Daten über topographische und/oder Hindernisse bildende Gegebenheiten an die von einem erhöhten Kollisionsrisiko mit diesen Gegebenheiten (z.B. Berge, Türme, Schornsteine, Kräne oder andere mobile Hindernisse insbesondere in Flughafennähe) betroffenen Fluggeräte übermitteln. Die Daten über diese Gegebenheiten können im Vermittlungsrechner gespeichert sein. Sie können auch ganz oder teilweise von den Gegebenheiten übermittelt werden, die hierzu mit Funksendern ausgestattet sein können (z. B. Kräne). Daten über topographische und/oder Hindernisse bildende Gegebenheiten können aber auch in den Vorrichtungen der Fluggeräte gespeichert sein und mit den ermittelten Daten über die eigene Position verglichen werden, um ein erhöhtes Kollisionsrisiko zu ermitteln. Bei Speicherung in den Fluggeräten ist ebenso wie bei Speicherung beim Übermittlungsrechner eine regelmäßige Aktualisierung möglich. In den Fluggeräten wird eine Kollisionswarnung bevorzugt dann aktiviert, wenn die aktuelle Flughöhe dies erfordert.

Ferner kann in den Fluggeräten nach Übermittlung von Daten über ein erhöhtes Kollisionsrisiko mit anderen Fluggeräten und/oder topographischen Gegebenheiten ein für den Piloten wahrnehmbarer Hinweis gegeben und/oder von diesen Fluggeräten an andere Fluggeräte oder an eine Flugkontrollstelle eine Warninformation automatisch abgesetzt und/oder von diesen Fluggeräten ein automatisches Ausweichmanöver ausgeführt werden.

Somit werden erfindungsgemäß die in den Fluggeräten gewonnenen Daten über deren Position und gegebenenfalls Flughöhe und/oder Kurs und/oder Fluggeschwindigkeit genau an dasjenige oder diejenigen Fluggeräte übermittelt, welche einer möglichen Kollision mit den erstgenannten Fluggeräten ausgesetzt sind, welche eine entsprechende Information über die anderen Fluggeräte erhalten. Aufgrund dieser Informationen können alle beteiligten Fluggeräte Ausweichmanöver einleiten oder andere Notmaßnahmen ergreifen. Dabei ist das Verfahren sehr kostengünstig realisierbar, da es sich vorhandener Systeme wie GPS und Mobilfunk bedienen kann.

Bevorzugte Einsatzbereiche des Verfahrens sind die allgemeine Luftfahrt sowie die regionale Verkehrsluftfahrt. Der Einsatz im Bereich der Luftsportgeräte ist ebenfalls möglich. Bei Ausbau der geplanten satellitengestützten Mobilfunksysteme, wie z.B. des Iridiumprojekts, ist auch ein Einsatz in Großflugzeugen der Verkehrsluftfahrt denkbar, um eine allgemeine Übersicht der im weiteren Umfeld befindlichen Flugzeuge in und aus allen Richtungen erhalten, was insbesondere aber nicht nur bei Transatlantikflügen äußerst hilfreich wäre.

Zusätzlich oder anstatt der Übermittlung der Daten von Fluggeräten an andere, kollisionsbedrohte Fluggeräte, können die Daten von Fluggeräten, die sich im Kontrollbereich einer oder mehrerer Flugkontrollstellen befinden oder sich an diesen annähern, an diese Flugkontrollstellen übermittelt werden. In den Flugkontrollstellen kann ein für die Kontrollpersonen wahrnehmbarer Hinweis auf die übermittelten Daten gegeben und/oder von den Flugkontrollstellen kann ein automatischer Warnhinweis an die kontrollierten Fluggeräte angesetzt und/oder automatisch ein Notprogramm ausgelöst werden. Für die Einbeziehung von Flugkontrollstellen ergeben sich folgende Anwendungsbereiche:

Auf kontrollierten Flugplätzen bzw. auf internationalen Verkehrsflughäfen haben der Radarlotse und die Anflugkontrolle jederzeit die Möglichkeit, sich die Daten derjenigen Flugzeuge der allgemeinen Luftfahrt auf ihrem Radarschirm anzeigen zu lassen, die sich in der Nähe des kontrollierten Luftraums befinden, um an- und abfliegenden Flugzeugen Ausweichempfehlungen geben zu können. Diese zusätzliche Sicherheit ist insbesondere bei Verkehrsflughäfen ohne Luftraum "C" von größter Wichtigkeit.

Die Flugleiter auf Verkehrs- und Sonderlandeplätzen können sich insbesondere auf einfachen LCD-Displays oder auch auf Computermonitoren (mit Kartenausschnitt der Umgebung des Flugplatzes) die Positionen der in der Platzrunde befindlichen Flugzeuge anzeigen lassen und vor anfliegenden Flugzeugen warnen, die sich nicht ordnungsgemäß angemeldet haben oder die den Flugplatz überfliegen, ohne eine Verkehrsinformation abzusetzen.

Fluglehrer können sich jederzeit über die aktuelle Position ihrer allein fliegenden Flugschüler informieren und gegebenenfalls über Funk Hinweise geben.

Nicht zuletzt kann die allgemeine Fluginformation (FIS) ebenfalls eine Übersicht über alle sich im Flug befindlichen Fluggeräte erhalten und im Notfall dem Such- und Rettungsdienst die letzte aktuelle Position eines verunglückten Flugzeuges mitteilen.

Das erfindungsgemäße System, welches insbesondere der Durchführung des erfindungsgemäßen Verfahrens dient, umfaßt in Fluggeräten angeordnete Vorrichtungen zum Gewinnen von Daten über die Position und gegebenenfalls Flughöhe und/oder Kurs und/oder Geschwindigkeit der Fluggeräte. Dabei weisen die Vorrichtungen zum Gewinnen von Daten bevorzugt ein GPS auf.

Ferner sind in den Fluggeräten Funkgeräte zum Übermitteln der Daten an mindestens eine Funkstation vorhanden, wobei es sich vorzugsweise um Mobilfunkgeräte handelt, die mit mindestens einer Mobilfunkstation zusammenarbeiten.

Der mindestens einen Funkstation ist ein Vermittlungsrechner zugeordnet, der die Übermittlung der übermittelten Daten von Fluggeräten über die mindestens eine Funkstation an die Funkgeräte anderer Fluggeräte steuert, die einem erhöhten Kollisionsrisiko mit den erstgenannten Fluggeräten unterliegen. Hierzu können in den Fluggeräten angeordnete Funkgeräte über Funk automatisch Verbindung mit der jeweils die größte Feldstärke aufweisenden Funkzelle eines Funksystems aufnehmen und die in der Funkzelle übermittelten Daten vom Vermittlungsrechner an Funkgeräte in den Fluggeräten übermittelt werden, die über Funk Verbindung mit derselben oder einer benachbarten Funkzelle haben. Zusätzlich oder statt dessen können in den Fluggeräten angeordnete Funkgeräte über Funk automatisch gleichzeitig Verbindung mit mehreren Funkzellen mit den größten Feldstärken des Funksystems aufnehmen und die in diesen Funkzellen übermittelten Daten vom Vermittlungsrechner an Funkgeräte in den Fluggeräten übermittelt werden, die über Funk Verbindung mit denselben Funkzellen haben.

Zusätzlich oder statt dessen kann der Vermittlungsrechner die Übermittlung der übermittelten Daten von Fluggeräten, die sich im Kontrollbereich einer oder mehrerer Flugkontrollstellen befinden oder sich an diesen annähern, an Funkgeräte dieser Flugkontrollstellen steuern. Dabei kann der mindestens einen Funkstation ein zentraler Vermittlungsrechner zugeordnet sein. Zusätzlich oder statt dessen können aber auch mehreren Funkstationen dezentrale Vermittlungsrechner zugeordnet sein. Die Übermittlung der Daten an andere Fluggeräte und/oder Flugkontrollstellen erfolgt wiederum bevorzugt über Mobilfünk.

In den Fluggeräten können Vorrichtungen angeordnet sein, die einen wahrnehmbaren Hinweis auf die empfangenen Daten geben und/oder automatisch eine Warninformation absetzen und/oder automatisch ein Ausweichmanöver einleiten. Bei der Vorrichtung zum Geben eines wahrnehmbaren Hinweises kann es sich um eine akustische Vorrichtung oder um eine optische Vorrichtung handeln.

Es ist möglich, für das System einen im Fluggerät vorhandenen GPS-Empfänger zu nutzen. Da sich der bevorzugte Einbau auf der den Fluggeräten zugeordneten Systemteile, die nachfolgend auch als Antikollisionsmonitor (AKM) bezeichnet werden, aus Gründen der Vermeidung von möglichen Störauswirkungen auf die sonstigen COM und NAV-Geräte im hinteren Flugzeugrumpf befinden sollte, wäre die dann notwendige Verkabelung sicherlich auch preislich aufwendiger, als die Verwendung einer separaten und einfachen GPS-Empfängerplatine im AKM.

Der AKM sollte möglichst mit Einschalten des Batteriehauptschalters des Fluggerätes automatisch aktiviert werden - ähnlich auch der ELT (Emergency Locator Transmitter). Zusätzlich kann auf dem Instrumentenbrett ein Ausschalter vorhanden sein (z.B. neben dem ELT-Schalter), um beim Bewegen des Fluggerätes ohne Flugabsicht oder bei Reparaturen das Gerät deaktivieren zu können.

Als optisches Anzeigeinstrument kann ein einfaches LCD-Display dienen, das entweder fest eingebaut ist oder mit einem Schwenkarm am Instrumentenbrett bzw. über diesem befestigt werden kann. Die Verwendung eines bereits vorhandenen Displays, z.B. mit der "moving map" eines normalen GPS Empfängers ist ebenfalls prinzipiell möglich. Aufgrund der Fülle von Informationen, die sich gerade auf einem farbigen Display eines GPS Empfängers befinden, wird jedoch bevorzugt für den AKM ein besonderes Display vorgesehen.

Soweit das erfindungsgemäße Verfahren oder System ein Kollisionsrisiko mit einem anderen Fluggerät nur dann in Betracht zieht, falls sich dieses in derselben Funkzelle oder in einer benachbarten Funkzelle oder in einer der Funkzellen mit den größten Feldstärken befindet, wird durch diese Vorauswahl der Datenaufwand für die Kollisionsprüfung erheblich reduziert, so daß die praktische Umsetzung erheblich erleichtert wird. Dabei macht sich die Erfindung die gegebene Einteilung von Funksystemen in einzelne Funkzellen zunutze. Die getroffenen Annahmen bezüglich der kollisionsrelevanten Funkzellen sind umfassend, so daß keine Möglichkeit übrig bleibt, daß ein kollisionsgefährdetes Fluggerät von dem Verfahren bzw. dem System nicht gemeldet wird. Dabei kann sich die Erfindung in besonders vorteilhafter Weise vorhandener Gerätschaften (GPS) und Systeme (z.B. Mobilfunk) für die Schaffung eines praktikablen und noch dazu kostengünstig zu etablierenden Antikollisions-Warnverfahrens und -Systems bedienen.

Die Arbeitsweise eines erfindungsgemäßen Antikollisionsmonitors wird nachfolgend anhand eines Ausführungsbeispiels mit Bezug auf die anliegende Zeichnung erläutert, die in schematischer Darstellung die Funkzellen eines Mobilfunknetzes und die Flugbewegung eines Fluggerätes zeigt.

Bei Aktivierung des AKM bucht sich das Mobilfunkteil (wie jedes Handy) in die nächstliegende Funkzelle mit größter Feldstärke ein und wählt die vom Mobilfunkbetreiber für den Einsatzzweck des AKM vorgesehene Rufnummer (z.B. 999 99 99). Sobald die Verbindung hergestellt ist, überträgt das Luftfahrzeug seine vom GPS ermittelten aktuellen Daten über Position, Flughöhe, Kurs und Geschwindigkeit an den Vermittlungsrechner des Mobilfunkbetreibers - beginnend und abschließend mit der Kennung des Luftfahrzeugs - wie z.B.:
D-EAKM; N 48°58,18'; E 08°08,93'; 1.700 ft; 260°; 120 kts; D-EAKM

Diese Daten werden zunächst in einem Speicher abgelegt. Sie werden dann immer wieder mit den aktuellsten Flugdaten dieses Luftfahrzeugs, etwa im Sekundentakt, überschrieben und damit aktualisiert.

Die Annahme und Wiedergabe der Flugdaten über Mobilfunk ist äußerst zeitkritisch - immerhin legt ein typisches, einmotoriges Luftfahrzeug etwa 60 Meter pro Sekunde zurück. Deshalb könnte eine dezentrale Zwischenspeicherung der empfangenen Flugdaten in derjenigen Funkzelle erfolgen, wo sich der AKM eingebucht hat, um eine Anhäufung von Flugdaten anderer Luftfahrzeuge zu verhindern, die für eine Kollisionswarnung nicht relevant sind.

Es sind auch intelligente Softwarelösungen denkbar, bei denen die Flugdaten von Luftfahrzeugen, die sich auf Kollisionskurs befinden, häufiger aufgefrischt und übermittelt werden und dabei unkritische Daten zeitweise ausgeblendet werden.

Gleichzeitig sendet der Vermittlungsrechner des Mobilfunkbetreibers über diejenige Funkzelle, in welche sich der AKM eingebucht hat, die vom AKM übermittelten Flugdaten zur Funktionskontrolle an den AKM zurück. Auf dem Display des AKM kann das Luftfahrzeug dann in der Mitte dargestellt werden - und zwar als Punkt mit der Angabe von Flughöhe und Fluggeschwindigkeit (1.700 / 120 - s.o.).

Weitere in dieser und den angrenzenden Funkzellen sendenden AKM können auf dem Display als Pfeile erscheinen - die Bewegungsrichtung in bezug auf das in der Mitte des Displays befindliche aktuelle Luftfahrzeug - und ebenfalls mit der Angabe von Flughöhe und Geschwindigkeit.

Das Display selbst sollte in drei, optisch gut sichtbare, konzentrische Bereiche unterteilt sein, deren Größe abhängig sein sollte von der zeitlichen Möglichkeit der Datenauffrischung:
a) Informationsbereich mit einem Radius von etwa 5 km
b) Annäherungsbereich mit einem Radius von etwa 2 km
c) Kollisionsbereich mit einem Radius von etwa 300 m

Im Kollisionsbereich kann bei Annäherung ein zusätzlicher akustischer und optischer Alarm ausgelöst werden.

Aus Gründen der einfachen Bedienung sowie der quasi automatischen Wirkungsweisung des AKM sollten die vom GPS übermittelten Höhenangaben in der vorhandenen Rohform belassen werden, was für Flughöhen unter 5.000 Fuß sicherlich ausreichend ist.

Beim Fliegen nach Flugflächen über 5.000 Fuß ist die vom GPS übermittelte Höhe ebenfalls ausreichend, da alle AKM die gleichen Höhendaten ermitteln. Allerdings könnte ein zusätzlich eingebauter barometrischer Höhenmesser die geflogene Flugfläche anzeigen, wobei diese Daten nur für eine Bodenkontrollstelle relevant sind, die ohnehin über Transponder eine Druckhöhenangabe erhält.

Das genannte LCD-Display stellt nur eine Variante der optischen Darstellungsmöglichkeiten des AKM dar. Einem bereits vorhandenen LCD-Display eines fest installierten GPS mit "moving map" ist wegen der bereits vorhandenen Informationsfülle vielfach ein gesondertes LCD-Display vorzuziehen. Jedoch können andere bereits vorhandene optische Darstellungsgeräte, die noch nicht mit Informationen überladen werden, eher als Anzeige benutzt werden. Darunter fallen unter anderem das sogenannte "secondary flight display" bei Verkehrsflugzeugen und Geschäftsreiseflugzeugen (herkömmlicherweise Kathodenstrahlröhren, neuerdings auch farbige LCD-Displays) sowie "Stormoscopes", die Gewitterfronten anzeigen und die auch gelegentlich in kleine Reiseflugzeuge eingebaut sind.

Bei erheblichem Platzmangel (z. B. bei Segelflugzeugen) bietet sich sogar an, einzeilige LED-Displays zu verwenden, die entweder im oder auf dem Instrumentenbrett montiert werden. Diese LED's würden dann nur vor einer akuten Kollisionsgefahr warnen - etwa durch ein akustisches Signal sowie eine Pfeilanzeige aus Richtung der drohenden Gefahr.

Möglich ist auch eine ausschließliche akustische Warnung sowie eine damit verbundene Ausweichempfehlung, wie z. B. "Traffic at 10, pull up right" oder auch "Traffic at 12, turn right".

Nachfolgend wird die Arbeitsweise des Verfahrens und Systems anhand eines konkreten Anwendungsbeispiels veranschaulicht:

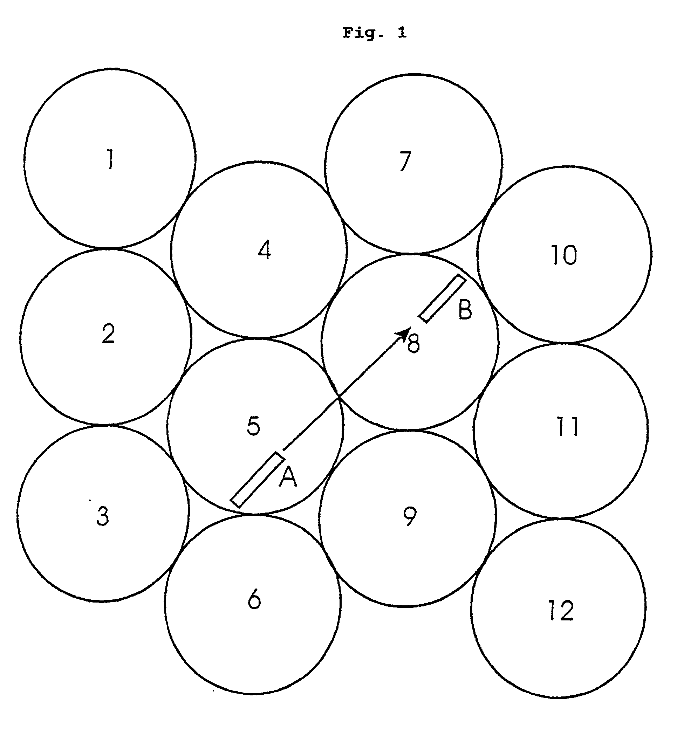

Die Zeichnung zeigt die idealisierte Darstellung von Funkzellen eines Mobilfunksystems. Tatsächlich besitzen die Funkzellen am Boden aufgrund unterschiedlicher topographischer Gegebenheiten keine ideale Kreisform. Außerdem überschneiden sich die einzelnen Funkzellen, um die Entstehung von Abschattungsgebieten zu vermeiden. Diese Tatsache hat jedoch keinen Einfluß auf die Wirkungsweise des AKM.

Ein auf dem Flugplatz "A" abfliegendes Flugzeug wird automatisch in die Funkzelle Nr. 5 eingebucht und übermittelt auch zu dieser Funkzelle seine Flugdaten. Der Vermittlungsrechner des Mobilfunkbetreibers weist dann die Funkzelle 5 sowie alle angrenzenden Funkzellen (in diesem Fall die Funkzellen 4, 2, 3, 6, 9 und 8) an, diese Flugdaten kontinuierlich auf der dafür vorgesehenen Rufnummer ("999 99 99") abzustrahlen, so daß alle anderen Fluggeräte mit AKM diese Flugdaten empfangen können, insofern diese in den Funkzellen (5, 4, 2, 3, 6, 9 und 8) eingebucht sind.

Es ist dabei auch denkbar, daß ein in den jeweiligen Funkzellen befindlicher dezentraler Auswertungsrechner eine Vorprüfung der Flugdaten vornimmt und nur diejenigen angrenzenden Funkzellen zur Ausstrahlung aktiviert, die sich nicht weiter als etwa 5 km vom aktuellen Standort des Luftfahrzeugs befinden (in diesem Fall z.B. die die Funkzellen 6 und 9). Allerdings sollte dabei eine Datenaktualisierung innerhalb einer Sekunde angestrebt werden.

Bewegt sich nun z.B. das Luftfahrzeug mit einem Kurs von etwa 040° in Richtung Flugplatz "B", so wird das Mobilfunkteil des AKM in dem Moment automatisch in die Funkzelle 8 eingebucht, wo die Feldstärke der Funkzelle 8 größer ist, als diejenige der Funkzelle 5.

Die Flugdaten des Luftfahrzeugs werden nun in der Funkzelle 8 erfaßt, gespeichert und in dieser sowie den angrenzenden Funkzellen 7, 4, 5, 9, 11 und 10 als Verkehrsinformation abgestrahlt.

Bei einem anderen System kann die Abstrahlung der Verkehrsinformationen des Luftfahrzeuges durch gleichzeitiges Einbuchen des AKM in mehrere Funkzellen mit der größten Feldstärke erfolgen.

Im konkreten Fall ist dann das von "A" nach "B" fliegende Luftfahrzeug beim Abflug zunächst gleichzeitig in die Funkzellen 5, 6 und 9 eingebucht.

Auf seinem Flugweg empfangen dann zeitlich hintereinander die Funkzellen 5, 9, 8 und 5, 8, 4 und 8, 7, 4 sowie bei Ankunft in "B" die Funkzellen 8, 10, 7 die Verkehrsinformationen dieses Luftfahrzeugs und strahlen diese wieder ab.

Eine softwaremäßige und damit zeitaufwendige Vorabauswertung der Flugdaten kann damit entfallen. Darüber hinaus verringert sich statistisch die Anzahl der von den einzelnen Funkzellen abzustrahlenden Verkehrsinformationen, was den Intervallzeiten der Datenauffrischung zugute kommt.

Ausgehend von der Tatsache, daß sich ein Luftfahrzeug normalerweise oberhalb eines möglichen Funk-Abschattungsbereichs bewegt, besteht dann auch die Möglichkeit diejenigen Funkzellen für den AKM zu sperren, die regional kleinere Bereiche versorgen - wie z.B. Innenstadtbezirke oder extreme Tallagen ohne Flugplätze.

## Patentansprüche

1. Verfahren zum Warnen vor Kollisionen zwischen Fluggeräten, bei dem
- Fluggeräte eine Vorrichtung zum Ermitteln von Daten über ihre Position aufweisen,
- die ermittelten Daten über Mobilfunk an einen Vermittlungsrechner übermittelt werden und
- die Daten von Fluggeräten, bei denen ein erhöhtes Risiko einer Kollision mit einem oder mehreren anderen Fluggeräten besteht, vom Vermittlungsrechner über Mobilfunk an diese anderen Fluggeräte übermittelt werden und/oder
- die Daten von Fluggeräten, die sich im Kontrollbereich einer oder mehrerer Flugkontrollstellen befinden oder sich an diesen annähern, an diese Flugkontrollstellen übermittelt werden.

2. Verfahren nach Anspruch 1, bei dem die Daten mittels eines GPS ermittelt werden.

3. Verfahren nach einem der Ansprüche 1 bis 2, bei dem die Fluggeräte über Funk automatisch Verbindung mit der jeweils die größte Feldstärke aufweisenden Funkzelle eines Funksystems aufnehmen und die in der Funkzelle übermittelten Daten vom Vermittlungsrechner an die Fluggeräte übermittelt werden, die über Funk Verbindung mit derselben oder einer benachbarten Funkzelle haben.

4. Verfahren nach Anspruch 3, bei dem der Vermittlungsrechner eine Vorprüfung der in einer Funkzelle übermittelten Daten vornimmt und nur diejenigen benachbarten Funkzellen zur Übermittlung der Daten aktiviert, die sich nicht weiter als einen vorgegebenen Abstand vom Standort des den Daten zugeordneten Fluggerätes entfernt sind.

5. Verfahren nach einem der Ansprüche 1 bis 4, bei dem die Fluggeräte über Funk automatisch gleichzeitig Verbindung mit mehreren Funkzellen mit den größten Feldstärken des Funksystems aufnehmen und die in diesen Funkzellen übermittelten Daten vom Vermittlungsrechner an die Fluggeräte übermittelt werden, die über Funk Verbindung mit denselben Funkzellen haben.

6. Verfahren nach einem der Ansprüche 3 bis 5, bei dem einzelne Funkzellen des Funksystems von der Datenübermittlung ausgeschlossen sind.

7. Verfahren nach einem der Ansprüche 1 bis 6, bei dem vom Vermittlungsrechner über Funk Daten über topographische und/oder Hindernisse bildende Gegebenheiten an die von einem erhöhten Kollisionsrisiko mit diesen topographischen Gegebenheiten betroffenen Fluggeräte übermittelt werden.

8. Verfahren nach einem der Ansprüche 1 bis 7, bei dem in den Fluggeräten nach Übermittlung von Daten über ein erhöhtes Kollisionsrisiko mit anderen Fluggeräten und/oder Gegebenheiten und/oder Ermittlung eines erhöhten Kollisionsrisikos mit Gegebenheiten ein wahrnehmbarer Hinweis gegeben und/oder von diesen Fluggeräten ein automatisches Ausweichmanöver ausgeführt wird und/oder in den Fluggeräten Daten desjenigen oder derjenigen Fluggeräte und/oder derjenigen Gegebenheiten angezeigt werden, mit denen ein erhöhtes Kollisionsrisiko besteht und/oder in den Fluggeräten Daten der in einem vorgegebenen Kollisionsbereich um das Fluggerät befindlichen Fluggeräte und/oder einem erhöhten Kollisionsrisiko unterworfenen Gegebenheiten angezeigt werden und/oder in den Flugkontrollstellen ein wahrnehmbarer Hinweis auf die übermittelten Daten gegeben und/oder von den Flugkontrollstellen ein automatischer Warnhinweis abgesetzt und/oder automatisch ein Notprogramm ausgelöst wird.

9. Verfahren nach Anspruch 8, bei dem die Daten innerhalb definierter Risikobereiche angezeigt werden.

10. Verfahren nach Anspruch 9, bei dem die Risikobereiche konzentrische Bereiche um das jeweilige Fluggerät sind.

11. Verfahren nach einem der Ansprüche 8 bis 10, bei dem in den Fluggeräten für das jeweilige Fluggerät eine feste Marke zusammen mit Flughöhe und Fluggeschwindigkeit des Fluggerätes und Pfeile für die Bewegungsrichtung der einem erhöhten Kollisionsrisiko unterworfenen Fluggeräte zusammen mit Flughöhe und Fluggeschwindigkeit dieser Fluggeräte angezeigt werden.

12. System zum Warnen vor Kollisionen zwischen Fluggeräten, insbesondere zur Durchführung des Verfahrens nach einem der Ansprüche 1 bis 11, mit
- in Fluggeräten angeordneten Vorrichtungen zum Gewinnen von Daten über die Position und gegebenenfalls Flughöhe und/oder Kurs und/oder Geschwindigkeit der Fluggeräte,
- in den Fluggeräten angeordneten Funkgeräten eines Mobilfünknetztes zum Übermitteln der Daten an mindestens eine Funkstation des Mobilfünknetzes,
- einem der mindestens einen Funkstation zugeordneten Vermittlungsrechner, der die Übermittlung der übermittelten Daten von Fluggeräten über die mindestens eine Funkstation an die Funkgeräte anderer Fluggeräte steuert, die einem erhöhten Kollisionsrisiko mit den erstgenannten Fluggeräten unterliegen, und/oder der die Übermittlung der übermittelten Daten von Fluggeräten, die sich im Kontrollbereich einer oder mehrerer Flugkontrollstellen befinden oder sich an diesen annähern, an Funkgeräte dieser Flugkontrollstellen steuert.

13. System nach Anspruch 12, bei dem in den Fluggeräten Vorrichtungen zum Geben eines wahrnehmbaren Hinweises auf die empfangenen Daten und/oder automatischen Einleiten eines Ausweichmanövers vorhanden sind und/oder in den Flugkontrollstellen Vorrichtungen zum Geben eines wahrnehmbaren Hinweises auf die empfangenen Daten und/oder Absetzen eines automatischen Warnhinweises und/oder automatisches Auslösen eines Notprogrammes vorhanden sind.

14. System nach Anspruch 12 oder 13, bei dem die Vorrichtungen zum Gewinnen von Daten ein GPS aufweisen.

15. System nach einem der Ansprüche 12 bis 14, bei dem der mindestens einen Funkstation ein zentraler Vermittlungsrechner zugeordnet ist.

16. System nach einem der Ansprüche 12 bis 15, bei dem mehreren Funkstationen dezentrale Vermittlungsrechner zugeordnet sind.

17. System nach einem der Ansprüche 12 bis 16, bei dem die in den Fluggeräten angeordneten Vorrichtungen zum Gewinnen von Daten und/oder Funkgeräte mit dem Einschalten des Batteriehauptschalters der Fluggeräte automatisch aktiviert werden und/oder die in den Fluggeräten angeordneten Vorrichtungen zum Gewinnen von Daten und/oder Funkgeräte mittels eines Ausschalters abschaltbar sind.

18. System nach einem der Ansprüche 12 bis 17, bei dem die Vorrichtungen zum Geben eines wahrnehmbaren Hinweises ein LCD-Display aufweisen.

19. System nach einem der Ansprüche 12 bis 18, bei dem die Vorrichtungen zum Geben eines wahrnehmbaren Hinweises eine Anzeige an einem Schwenkarm am Instrumentenbrett aufweisen.

## Claims

1. A method for warning against collisions between aircraft wherein:
- aircraft have a device for determining data on their positions,
- the data determined is transmitted to a switching computer via a mobile radio, and
- the data on aircraft for which there is an increased risk of a collision with one or more other aircraft is transmitted from the switching computer to these other aircraft via a mobile radio, and/or
- the data on aircraft which are within the control range of one or more air traffic control centres or are approaching them is transmitted to these air traffic control centres.

2. The method as claimed in claim 1 wherein the data is determined by means of a GPS.

3. The method as claimed in any one of claims 1 to 2 wherein the aircraft, via a radio connection, automatically get into communication with the radio cell of a radio system that has the largest field strength and the data transmitted in the radio cell is transmitted from the switching computer to the aircraft which, via a radio connection, are in a communication with said radio cell or a neighbouring radio cell.

4. The method as claimed in claim 3 wherein the switching computer carries out a preliminary check of the data transmitted in a radio cell and only activates those neighbouring radio cells for data transmission which are not more distant than at a predetermined distance from the location of the aircraft associated with the data.

5. The method as claimed in any one of claims 1 to 4 wherein the aircraft, via a radio connection, automatically get into a simultaneous communication with several radio cells having the largest field strengths of the radio system and the data transmitted in these radio cells is transmitted from the switching computer to the aircraft which, via a radio connection, are in a communication with said radio cells.

6. The method as claimed in any one of claims 3 to 5 wherein individual radio cells of the radio system are excluded from data transmission.

7. The method as claimed in any one of claims 1 to 6 wherein the switching computer, via a radio connection, transmits data on topographic features and/or features forming obstacles to the aircraft faced with an increased risk of collision with these topographic features.

8. The method as claimed in any one of claims 1 to 7 wherein, upon transmission of data on an increased risk of collision with other aircraft and/or features and/or upon determination of an increased risk of collision with features, a perceivable indication is given in the aircraft and/or these aircraft carry out an evasive manoeuvre and/or data is displayed in the aircraft on said aircraft and/or those aircraft and/or those features with which there is an increased risk of collision and/or data is displayed in the aircraft on those aircraft which are in a predetermined area of collision around the aircraft and/or on features subjected to an increased risk of collision and/or a perceivable indication on the data transmitted is given in the air traffic control centres and/or an automatic warning indication is provided and/or an emergency program is automatically launched by the air traffic control centres.

9. The method as claimed in claim 8 wherein the data is displayed within defined risk areas.

10. The method as claimed in claim 9 wherein the areas of risk are concentric areas around the respective aircraft.

11. The method as claimed in any one of claims 8 to 10 wherein a fixed mark, along with the flight altitude and flying speed of the aircraft, and arrows showing the direction of motion of the aircraft subjected to an increased risk of collision, along with the flight altitude and flying speed of those aircraft, are displayed for the respective aircraft in those aircraft.

12. A method for warning against collisions between aircraft, particularly for carrying out the method as claimed in any one of claims 1 to 11, comprising:
- devices arranged in aircraft for acquiring data on the position and possibly the flight altitude and/or course and/or speed of the aircraft,
- radio equipment of a mobile radio network arranged in the aircraft for data transmission to at least one radio station of the mobile radio network,
- a switching computer associated with the at least one radio station which controls the transmission of the data transmitted from aircraft, via the at least one radio station, to the radio equipment of other aircraft which are subjected to a risk of collision with the aircraft mentioned first, and/or which controls the transmission of the data transmitted from aircraft which are in the range of control of one or more air traffic control centres or are approaching them, to the radio equipment of said air traffic control centres.

13. The system as claimed in claim 12 wherein devices for providing a perceivable indication on the data received and/or for automatically releasing an evasive manoeuvre are available in the aircraft and/or devices for providing a perceivable indication on the data received and/or for providing an automatic warning indication and/or for automatically releasing an emergency program are available in the air traffic control centres.

14. The system as claimed in claim 12 or 13 wherein the devices for acquiring data have a GPS.

15. The system as claimed in any one of claims 12 to 14 wherein the at least one radio station has associated thereto a centralized switching computer.

16. The system as claimed in any one of claims 12 to 15 wherein several radio stations have associated thereto a decentralized switching computer.

17. The system as claimed in any one of claims 12 to 16 wherein the devices arranged in the aircraft for acquiring data and/or radio equipment are automatically activated when the battery main switch of the aircraft is turned on and/or the devices arranged in the aircraft for acquiring data and/or radio equipment are adapted to be turned off by means of a circuit breaker.

18. The system as claimed in any one of claims 12 to 17 wherein the devices for providing a perceivable indication have an LDC display.

19. The system as claimed in any one of claims 12 to 18 wherein the devices for providing a perceivable indication have a display disposed on a swivel arm on the dashboard.

## Revendications

1. Procédé d'avertissement en cas de danger de collision entre avions, dans lequel
- les avions présentent un dispositif permettant de déterminer les données concernant leur position,
- les données déterminées sont transmises par radio mobile à un ordinateur de liaison et
- les données concernant les avions pour lesquels il existe un risque accru de collision avec un ou plusieurs autres appareils sont transmises de l'ordinateur de liaison par radio mobile à ces autres avions et/ou
- les données des avions qui se trouvent dans la zone de contrôle d'un ou plusieurs postes de contrôle aériens ou qui s'en approchent sont transmises à ces postes de contrôle aérien.

2. Procédé selon la revendication 1, dans lequel les données sont établies au moyen d'un système GPS.

3. Procédé selon l'une des revendications 1 et 2, dans lequel les avions entrent par radio en liaison automatique avec la cellule hertzienne présentant la plus grande intensité de champ d'un système radio et les données transmises dans la cellule hertzienne sont transférées de l'ordinateur de liaison aux avions qui ont une liaison par radio avec cette cellule ou une cellule hertzienne voisine.

4. Procédé selon la revendication 3, dans lequel l'ordinateur de liaison procède à un examen préalable des données transmises dans une cellule hertzienne et n'active, en vue de la transmission des données, que les cellules hertziennes voisines qui ne se sont pas éloignées de plus d'un intervalle prédéterminé de l'endroit où se trouve l'avion auquel se rapportent les données.

5. Procédé selon l'une des revendications 1 à 4, dans lequel les avions entrent en liaison simultanément de façon automatique par radio avec plusieurs cellules hertziennes présentant les plus grandes intensités de champ du système radio et les données transmises dans ces cellules hertziennes sont transmises par l'ordinateur de liaison aux avions qui sont en liaison par radio avec les mêmes cellules hertziennes.

6. Procédé selon l'une des revendications 3 à 5 dans lequel certaines cellules hertziennes du système radio sont exclues de la transmission de données.

7. Procédé selon l'une des revendications 1 à 6, dans lequel sont transmises par radio par l'ordinateur de liaison des données sur les circonstances topographiques et/ou représentant des obstacles aux avions concernés par un risque de collision accru du fait de ces circonstances topographiques.

8. Procédé selon une des revendications 1 à 7, dans lequel dans les avions, après transmission de données concernant un risque de collision accru avec d'autres appareils et/ou des circonstances et/ou la détermination d'un risque de collision accru dans certaines circonstances, une indication perceptible est donnée et/ou une manoeuvre d'évitement automatique est effectuée par cet avion et/ou dans les avions sont indiquées des données concernant cet avion ou les autres appareils et/ou les circonstances dans lesquelles un risque de collision accru existe et/ou dans les avions sont affichées des données sur les appareils se trouvant au voisinage de l'avion en question dans une zone de collision pré-indiquée et/ou qui sont soumis à un risque de collision accru, et/ou, dans les postes de contrôle aériens, une indication perceptible est fournie sur les données transmises et/ou une indication de mise en garde automatique est affichée ou un programme d'urgence est automatiquement déclenché.

9. Procédé selon la revendication 8, dans lequel les données sont affichées à l'intérieur de domaines de risques définis.

10. Procédé selon la revendication 9, dans lequel les domaines de risque sont des domaines concentriques autour de l'avion en question.

11. Procédé selon l'une des revendications 8 à 10, dans lequel dans les avions est fournie pour chaque avion en question une indication déterminée avec la hauteur de vol et la vitesse de vol de l'appareil ainsi que des flèches donnant la direction de déplacement des avions soumis à un risque de collision accru avec la hauteur de vol et la vitesse de vol de ces appareils.

12. Système d'avertissement contre le danger de collision entre les avions, en particulier pour l'application du procédé selon l'une des revendications 1 à 11, avec
- des dispositifs prévus dans les avions pour l'obtention de données sur la position et le cas échéant des hauteurs de vol et/ou le cap et/ou la vitesse des appareils,
- des appareils radio disposés dans les avions et appartenant à un réseau radio mobile pour la transmission des données à au moins une station de radio du réseau radio mobile,
- un ordinateur de liaison rattaché à au moins une station radio, qui commande la transmission des données transmises par les avions via au moins une station de radio aux appareils radio d'autres avions, qui sont soumis à un risque de collision accru avec les avions mentionnés en premier, et/ou qui commande le transfert des données transmises par les avions qui se trouvent dans la zone de contrôle d'un ou plusieurs postes de contrôle aérien ou qui s'en approchent, à des appareils radio de ces postes de contrôle aérien.

13. Système selon la revendication 12, dans lequel, dans les avions, se trouvent des dispositifs pour donner des indications perceptibles quant aux données reçues et/ou pour amorcer automatiquement une manoeuvre d'évitement et/ou l'on trouve dans les postes de contrôle aérien des dispositifs pour donner une indication perceptible quant aux données reçues et/ou pour émettre une indication de mise en garde automatique et/ou pour déclencher automatiquement un programme d'urgence.

14. Systèmes selon la revendication 12 ou 13, dans lequel les dispositifs d'obtention de données présentent un GPS.

15. Système selon l'une des revendications 12 à 14, dans lequel la station de radio, présente à au moins un exemplaire, est rattachée à un ordinateur de liaison central.

16. Système selon l'une des revendications 12 à 15, dans lequel plusieurs stations de radio sont rattachées à l'ordinateur de liaison central.

17. Système selon l'une des revendications 12 à 16, dans lequel les dispositifs placés dans les avions pour l'obtention de données et/ou les appareils radio sont activés automatiquement par fermeture du contacteur principal de batterie des avions et/ou les dispositifs placés dans les avions pour l'obtention de données et/ou les appareils radio peuvent être débranchés au moyen d'un disjoncteur.

18. Système selon l'une des revendications 12 à 17, dans lequel les dispositifs visant à donner une indication perceptible présentent un affichage à cristaux liquides.

19. Système selon l'une des revendications 12 à 18, dans lequel les dispositifs visant à donner une indication perceptible présentent un affichage sur un bras d'orientation du tableau de bord.
